# EUROPÄISCHE PATENTSCHRIFT

(11) **EP 3 418 097 B1**
(45) Veröffentlichungstag und Bekanntmachung des Hinweises auf die Patenterteilung: **02.03.2022**
(21) Anmeldenummer: 18176932.4
(22) Anmeldetag: 11.06.2018
(51) Int. Cl.: B60K 15/04, B60K 15/035, B60K 13/04

(54) **BEFÜLLKOPF FÜR EINEN FLÜSSIGKEITSTANK**
FILLING HEAD FOR A LIQUID TANK
TÊTE DE REMPLISSAGE POUR UN RÉSERVOIR DE LIQUIDE

(30) Priorität: 22.06.2017 DE 102017113821
(43) Veröffentlichungstag der Anmeldung: 26.12.2018
(73) Patentinhaber: VERITAS AG, 63571 Gelnhausen (DE)
(72) Erfinder: Groß, Michael, 61200 Wölfersheim (DE)
(74) Vertreter: Patentship Patentanwaltsgesellschaft mbH

(56) Entgegenhaltungen:
- EP-A1- 2 752 326
- EP-A1- 2 789 490
- DE-A1-102016 014 051

## Beschreibung

Die vorliegende Erfindung betrifft einen Befüllkopf für einen Flüssigkeitstank in einem Fahrzeug.

In herkömmlichen Fahrzeugen werden oftmals abgegebene Abgase im Rahmen eines Abgasreinigungsverfahrens mittels selektiver katalytischer Reduktion (SCR) gereinigt, wobei hierbei wässrige Harnstofflösung dem Abgasstrang zugeführt wird. Um die dafür benötige Harnstofflösung aufzunehmen weisen herkömmliche Fahrzeuge Flüssigkeitstanks, insbesondere Harnstofftanks, auf. Bei der Betankung eines Flüssigkeitstanks mit einer wässrigen Harnstofflösung wird die Flüssigkeit oftmals mit einer Befüllgeschwindigkeit von bis zu 40 l/min zugeführt. Hierbei soll vermieden werden, dass während des Betankungsvorgangs Flüssigkeit aus einem Befüllkopf austritt und das Äußere des Fahrzeugs oder die Umwelt verschmutzt.

Die Druckschrift DE 10 2011 009 745 A1 beschreibt in diesem Zusammenhang einen Einfüllstutzen für einen Nebenflüssigkeitsbehälter für ein Fahrzeug.

Die Druckschrift EP 2 752 326 A1 beschreibt einen Befüllkopf für einen Flüssigkeitstank.

Die Druckschrift EP 2 789 490 A1 beschreibt einen Befüllkopf für einen Flüssigkeitstank.

Die Druckschrift DE 10 2016 014 051 A1 beschreibt einen SCR-Katalysatortank und Kraftfahrzeug mit einem SCR-Katalysatortank.

Es ist die der Erfindung zugrundeliegende Aufgabe, einen verbesserten Befüllkopf anzugeben, mit welchem ein Austreten von Flüssigkeit beim Betanken wirksam verhindern werden kann.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Befüllkopf gemäß Anspruch 1 gelöst.

Durch den Befüllkopf können hohe Befüllgeschwindigkeiten von bis zu 40 l/min ermöglicht werden, ohne dass es zu einem Austritt von Flüssigkeit aus der Aufnahmeöffnung des ersten Gehäuseteils kommt. Bei hohen Befüllgeschwindigkeit von bis zu 40 l/min muss die durch die eingeleitete Flüssigkeit aus dem Flüssigkeitstank verdrängte Luft aus dem Befüllkopf ausgeleitet werden. Hierbei weist das zweite Gehäuseteil insbesondere einen mit dem Flüssigkeitstank fluidtechnisch verbindbaren Auslassstutzen zum Auslassen der zugeführten Flüssigkeit in den Flüssigkeitstank auf, wobei insbesondere die aus dem Flüssigkeitstank beim Einleiten von Flüssigkeit verdrängte Luft durch den Auslassstutzen entgegen der Strömungsrichtung der Flüssigkeit aus dem Flüssigkeitstank in den Befüllkopf strömen kann.

Durch die Druckausgleichsöffnung in dem Verbindungsstutzen kann ein wirksamer Druckausgleich zwischen dem Innenraum des Verbindungsstutzens und einem Gehäuseinnenraum des Gehäuses des Befüllkopfes sichergestellt werden, um ein Aufspritzen von Flüssigkeit in dem Verbindungsstutzen zu reduzieren. Dadurch können die hohen Befüllgeschwindigkeiten von bis zu 40 l/min aufrechterhalten werden und zudem kann ein Aufspritzen der zugeführten Flüssigkeit und ein möglicherweise auftretendes Austreten der Flüssigkeit aus dem Befüllkopf verhindert werden.

In einer vorteilhaften Ausführungsform des Befüllkopfes ist die zumindest eine Druckausgleichsöffnung des Verbindungsstutzens als eine im Querschnitt kreisförmige, V-förmige und/oder U-förmige Druckausgleichsöffnung ausgebildet, wobei die Druckausgleichsöffnung insbesondere als eine sich verjüngende Druckausgleichsöffnung ausgebildet ist, welche sich von einem der Aufnahmeöffnung zugewandten Ende der Druckausgleichsöffnung zu einem dem Entlüftungsstutzen zugewandten Ende der Druckausgleichsöffnung verjüngt.

Dadurch wird beispielsweise der technische Vorteil erreicht, dass durch die zumindest eine im Querschnitt kreisförmige, V-förmige und/oder U-förmige Druckausgleichsöffnung eine besonders wirksame Luftströmung beim Luftaustausch ermöglicht wird. Hierbei ist die Druckausgleichsöffnung insbesondere als eine sich verjüngende Druckausgleichsöffnung ausgebildet, welche sich von einem der Aufnahmeöffnung zugewandten Ende der Druckausgleichsöffnung zu einem dem Entlüftungsstutzen zugewandten Ende der Druckausgleichsöffnung verjüngt, wodurch eine vorteilhafte Luftführung gewährleistet wird. Dadurch wird der Vorteil erreicht, dass an einem dem Entlüftungsstutzen zugewandten Ende der Druckausgleichsöffnung aufgrund der sich verjüngenden Form die Menge der möglicherweise durch die Druckausgleichsöffnung tretenden Flüssigkeit reduziert werden kann.

In einer vorteilhaften Ausführungsform des Befüllkopfes weist das dritte Gehäuseteil eine dritte Gehäusewand auf, weist das zweite Gehäuseteil eine zweite Gehäusewand auf, und sind die dritte Gehäusewand und die zweite Gehäusewand miteinander verbunden und begrenzen einen Gehäuseinnenraum, wobei sich der Verbindungsstutzen von der dritten Gehäusewand aus in den Gehäuseinnenraum erstreckt, und wobei die Druckausgleichsöffnung des Verbindungsstutzens insbesondere im Bereich der dritten Gehäusewand angeordnet ist.

Dadurch wird beispielsweise der technische Vorteil erreicht, dass der durch das zweite und dritte Gehäuseteil begrenzte Gehäuseinnenraum ein wirksames Ausleiten von aufgenommener Luft ermöglicht. Dadurch, dass die Druckausgleichsöffnung an dem Verbindungsstutzen im Bereich der dritten Gehäusewand angeordnet ist, welche der Aufnahmeöffnung zugewandt ist, kann besonders wirksam verhindert werden, das Flüssigkeit, die sich möglicherweise im unteren Bereich des Gehäuseinnenraums gesammelt hat, durch die Druckausgleichsöffnung entweicht.

In einer vorteilhaften Ausführungsform des Befüllkopfes weist das zweite Gehäuseteil oder das dritte Gehäuseteil einen Einführabschnitt auf, welcher in einen Aufnahmeabschnitt des dritten Gehäuseteils oder des zweiten Gehäuseteils einführbar ist, um das zweite Gehäuseteil und das dritte Gehäuseteil miteinander zu verbinden.

Dadurch wird beispielsweise der technische Vorteil erreicht, dass eine besonders wirksame Verbindung zwischen dem zweiten Gehäuseteil und dem dritten Gehäuseteil sichergestellt wird.

In einer vorteilhaften Ausführungsform des Befüllkopfes ist der Verbindungsstutzen als ein Hohlzylinder oder als ein Hohlkonus gebildet.

Dadurch wird beispielsweise der technische Vorteil erreicht, dass beim Zuführen der Flüssigkeit eine gute Führungswirkung und ein laminarer oder turbulenzfreier Strömungsfluss in dem Verbindungsstutzen sichergestellt werden kann. Bei der Herstellung des Hohlzylinders im Rahmen eines Spritzgussverfahrens kann der Hohlzylinder insbesondere eine Entformschräge aufweisen.

In einer vorteilhaften Ausführungsform des Befüllkopfes ist an einer Außenseite des Verbindungsstutzens zumindest ein Abstandselement gebildet, wobei das Abstandselement geformt ist, einen Entlüftungskanal im Bereich der Druckausgleichsöffnung zu bilden.

Dadurch wird beispielsweise der technische Vorteil erreicht, dass der Entlüftungskanal zwischen dem Verbindungsstutzen und dem Gehäuse des Befüllkopfes eine wirksame Entlüftung von Luft aus dem Befüllkopf sicherstellt.

In einer vorteilhaften Ausführungsform des Befüllkopfes wird das Abstandselement durch eine Längsrippe gebildet, die sich zumindest abschnittsweise entlang einer Längsachse des Verbindungsstutzens erstreckt.

Dadurch wird beispielsweise der technische Vorteil erreicht, dass die Längsrippe eine wirksame Beabstandung sicherstellt und zudem die Stabilität des Verbindungsstutzens verbessert.

In einer vorteilhaften Ausführungsform des Befüllkopfes erstreckt sich der Entlüftungsstutzen parallel zum Verbindungsstutzen.

Dadurch wird beispielsweise der technische Vorteil erreicht, dass der Befüllkopf besonders raumsparend gestaltet ist, da verhindert wird, dass der Befüllkopf eine Vielzahl von Anschlüssen aufweist, welche sich von dem Befüllkopf in unterschiedliche Richtungen erstrecken.

In einer vorteilhaften Ausführungsform des Befüllkopfes umfasst der Befüllkopf einen Ringmagneten, welcher ausgebildet ist, eine Zapfventilautomatik des Zapfventils freizugeben, und wobei der Ringmagnet insbesondere aus einem magnetischen Kunststoffmaterial gebildet ist.

Dadurch wird beispielsweise der technische Vorteil erreicht, dass eine Fehlbetankung des Flüssigkeitstanks verhindert werden kann. Das Zapfventil weist eine Zapfventilautomatik auf, welche durch den Ringmagneten freigegeben wird, so dass verhindert werden kann, dass beispielsweise durch das Zapfventil abgegebene Harnstofflösung ohne magnetische Wechselwirkung mit dem Ringmagnet abgegeben werden kann. Somit kann sichergestellt werden, dass z.B. bei Dieselfahrzeugen, keine Harnstofflösung in einen Dieseltank eingefüllt werden kann. Der Ringmagnet besteht hierbei aus einem magnetischen Kunststoff, insbesondere einem durch einen Spritzguss hergestellten Kunststoffring, welcher magnetische Partikel, z.B. Eisen-Partikel und/oder Seltene Erd-Partikel wie Neodym-Partikel, aufweist, um die magnetischen Eigenschaften des Ringmagnets bereitzustellen.

In einer vorteilhaften Ausführungsform des Befüllkopfes ist der Ringmagnet zwischen dem ersten Gehäuseteil und dem dritten Gehäuseteil angeordnet, wobei der Ringmagnet eine Magnetöffnung aufweist, wobei das Zapfventil durch die Magnetöffnung in eine Aufnahme des Verbindungsstutzens einführbar ist, und wobei der Ringmagnet insbesondere als ein in Richtung des ersten Gehäuseteils konisch zulaufender Ringmagnet ausgebildet ist.

Dadurch wird beispielsweise der technische Vorteil erreicht, dass das Zapfventil durch die Aufnahmeöffnung des ersten Gehäuseteils und durch die Magnetöffnung des Ringmagnets wirksam in den Verbindungsstutzen eingeführt werden kann. Hierbei umschließt der Ringmagnet das Zapfventil vorteilhaft und kann dadurch die Zapfventilautomatik des Zapfventils wirksam auslösen. Insbesondere durch die in Richtung des ersten Gehäuseteils konisch zulaufende Form des Ringmagnets kann eine besonders wirksame Aufnahme des Ringmagnets in einer entsprechenden Aufnahme des Befüllkopfes in dem ersten Gehäuseteil sichergestellt werden.

In einer vorteilhaften Ausführungsform des Befüllkopfes weist der Befüllkopf einen Dichtungsring auf, wobei der Dichtungsring zwischen dem Ringmagneten und dem ersten Gehäuseteil angeordnet ist, wobei der Dichtungsring eine Dichtungsöffnung aufweist, und wobei das Zapfventil durch die Dichtungsöffnung in eine Aufnahme des Verbindungsstutzens einführbar ist.

Dadurch wird beispielsweise der technische Vorteil erreicht, dass der Dichtungsring eine fluidtechnische Abdichtung des Bereichs zwischen dem Ringmagneten und dem Gehäuse ermöglicht, wodurch verhindert werden kann, dass Flüssigkeit unkontrolliert in den Befüllkopf eindringen kann.

In einer vorteilhaften Ausführungsform des Befüllkopfes weist der Dichtungsring einen Ringrand und eine umlaufende Dichtungsrippe auf, wobei sich die umlaufende Dichtungsrippe von dem Ringrand aus umlaufend in die Dichtungsöffnung erstreckt.

Dadurch wird beispielsweise der technische Vorteil erreicht, dass die Dichtungsrippe besonders vorteilhaft an dem durch die Dichtungsöffnung des Dichtungsrings eingeführten Zapfventils anliegt und damit eine besonders wirksame fluidtechnische Abdichtung sicherstellt.

In einer vorteilhaften Ausführungsform des Befüllkopfes umfasst der Verbindungsstutzen ein Schwallelement, insbesondere ein ringförmiges Schwallelement, das mit dem Verbindungsstutzen verbindbar ist.

Dadurch wird beispielsweise der technische Vorteil erreicht, dass das Schwallelement, ein Zurückschwallen, bzw. Zurückspritzen, von Flüssigkeit aus dem Flüssigkeitstank in den Befüllkopf verhindern kann.

In einer vorteilhaften Ausführungsform des Befüllkopfes ist an einer Außenseite des

Verbindungsstutzens eine Aussparung gebildet, wobei das Schwallelement einen Vorsprung aufweist, wobei der Vorsprung in die Aussparung einführbar ist, um das Schwallelement mit dem Verbindungsstutzen zu verbinden, und wobei das Schwallelement insbesondere durch eine Bajonett-Verbindung mit dem Verbindungsstutzen verbindbar ist.

Dadurch wird beispielsweise der technische Vorteil erreicht, dass durch das Einführen des Vorsprungs des Schwallelements in die Aussparung des Verbindungsstutzens eine besonders wirksame Fixierung des Schwallelements an dem Verbindungsstutzen sichergestellt wird.

In einer vorteilhaften Ausführungsform des Befüllkopfes ist an einer Außenseite des Verbindungsstutzens zumindest eine Längsrippe gebildet, welche sich zumindest abschnittsweise entlang einer Längsachse des Verbindungsstutzens erstreckt, wobei die Längsrippe insbesondere einen Anschlag für das mit dem Verbindungsstutzen verbundene Schwallelement aufweist.

Dadurch wird beispielsweise der technische Vorteil erreicht, dass sich durch die Längsrippe die Halterung des Schwallelementes verbessert und an dem Schwallelement auftretende Kräfte besser auf den Verbindungsstutzen übertragen werden können. Durch den durch die Längsrippe gebildeten Anschlag für das Schwellelement kann ein Verrutschen des Schwallelements an dem Verbindungsstutzen verhindert werden.

In einer vorteilhaften Ausführungsform des Befüllkopfes ist die Deflektorwand als eine gebogene Deflektorwand ausgebildet, welche die Innenseite des dritten Gehäuseteils zumindest abschnittsweise umläuft.

Gemäß der Erfindung ist die Deflektorwand in einem Gehäuseinnenraum des Befüllkopfes auf einer gegenüberliegenden Seite des Entlüftungsstutzens angeordnet, um aufwallende Flüssigkeit vom Entlüftungspfad abzuleiten.

Dadurch wird beispielsweise der technische Vorteil erreicht, dass die Deflektorwand sicherstellt, dass durch den Auslassstutzen in einen Gehäuseinnenraum des Gehäuses des Befüllkopfes einströmende Flüssigkeit nicht unkontrolliert in die Druckausgleichsöffnung eindringen kann, sondern durch die Deflektorwand aufgehalten und abgeleitet werden kann. Ausführungsbeispiele der Erfindung sind in den Zeichnungen dargestellt und werden im Folgenden näher beschrieben.

Es zeigen:
Fig. 1 eine perspektivische Außenansicht eines Befüllkopfes;
Fig. 2 eine Querschnittsansicht eines Befüllkopfes;
Fig. 3 eine vergrößerte Querschnittsansicht des in Fig. 2 dargestellten Befüllkopfes;
Fig. 4 zeigt eine Unteransicht eines dritten Gehäuseteils des in Fig. 1 dargestellten Befüllkopfes gemäß einer weiteren Ausführungsform; und
Fig. 5 zeigt eine weitere Ansicht des in Fig. 4 dargestellten Befüllkopfes.

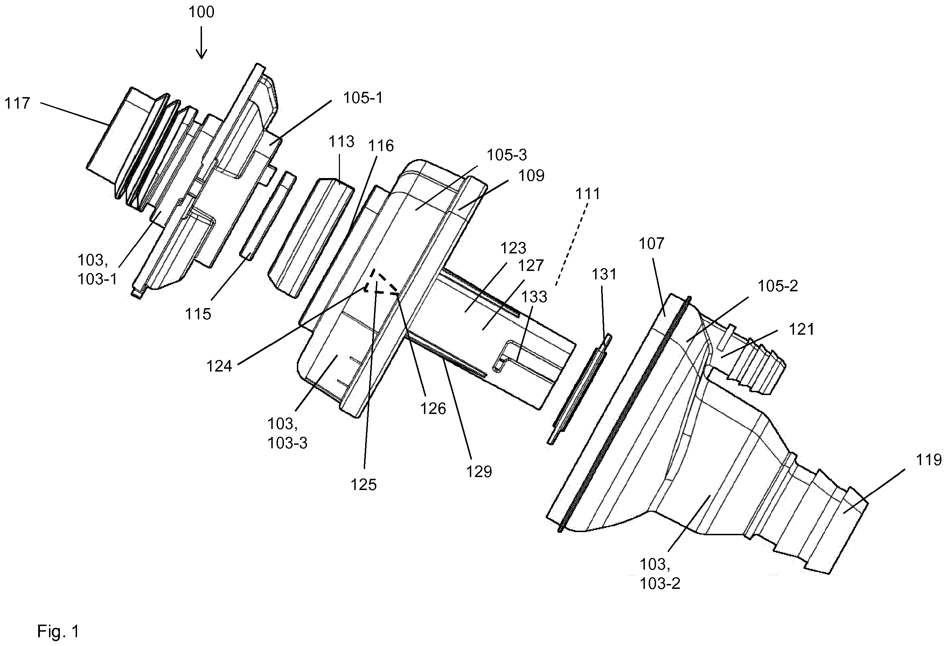

Fig. 1 zeigt eine perspektivische Außenansicht eines Befüllkopfes 100 in einer Explosionsdarstellung.

Der Befüllkopf 100 weist ein Gehäuse 103 auf, das aus einem ersten Gehäuseteil 103-1, einem zweiten Gehäuseteil 103-2 und einem dritten Gehäuseteil 103-3 zusammengesetzt ist. Hierbei ist das dritte Gehäuseteil 103-3 zwischen dem ersten Gehäuseteil 103-1 und dem zweiten Gehäuseteil 103-2 angeordnet. Das dritte Gehäuseteil 103-3 ist mit dem ersten Gehäuseteil 103-1 und ist mit dem zweiten Gehäuseteil 103-2 verbunden.

Das erste Gehäuseteil 103-1 weist eine erste Gehäusewand 105-1 auf. Das zweite Gehäuseteil 103-2 weist eine zweite Gehäusewand 105-2 auf. Das dritte Gehäuseteil 103-3 weist eine dritte Gehäusewand 105-3 auf. Die zweite Gehäusewand 105-2 weist einen Einführabschnitt 107 auf, welcher in einen Aufnahmeabschnitt 109 der dritten Gehäusewand 105-3 einführbar ist, um das zweite Gehäuseteil 103-2 mit dem dritten Gehäuseteil 103-3, insbesondere formschlüssig, zu verbinden. Somit begrenzen die zweite Gehäusewand 105-2 des zweiten Gehäuseteils 103-2 und die dritte Gehäusewand 105-3 des dritten Gehäuseteils 103-3 einen in Fig. 1 nur schematisch dargestellten Gehäuseinnenraum 111.

An einer dem ersten Gehäuseteil 103-1 zugewandten Seite der zweiten Gehäusewand 105-2 schließt die erste Gehäusewand 105-1 des ersten Gehäuseteils 103-1 den Gehäuseinnenraum 111 ab.

Zwischen dem zweiten Gehäuseteil 103-2 und dem ersten Gehäuseteil 103-1 ist ein Ringmagnet 113 angeordnet. Der Ringmagnet 113 umfasst insbesondere ein magnetisches Kunststoffmaterial, insbesondere ein Kunststoffmaterial, in dem magnetische Füllstoffe, wie z.B. Eisen-Partikel und/oder Seltene Erd-Partikel wie Neodym-Partikel, aufgenommen sind. Der Ringmagnet 113 weist eine in Fig. 1 nicht gezeigte Magnetöffnung auf, durch welche eine in Fig. 1 nicht dargestelltes Zapfventil zum Befüllen eines Flüssigkeitstanks in den Befüllkopf 100 eingeführt werden kann. Der Ringmagnet 113 ist ausgebildet, eine Zapfventilautomatik des Zapfventils freizugeben, damit Flüssigkeit aus dem Zapfventil durch den Befüllkopf 100 in den Flüssigkeitstank geleitet werden kann. Der Ringmagnet 113 ist hierbei insbesondere als ein in Richtung des ersten Gehäuseteils 103-1 konisch zulaufender Ringmagnet 113 ausgebildet und weist eine sich entsprechend verjüngende Form auf, zum Verbau des Ringmagneten 113 in der gewünschten Polarisationsrichtung.

Zwischen dem Ringmagnet 113 und dem ersten Gehäuseteil 103-1 ist ein Dichtungsring 115 angeordnet. Der Dichtungsring 115 weist eine in Fig. 1 nicht dargestellte Dichtungsöffnung auf, durch welche das Zapfventil geführt werden kann. Der Dichtungsring 115 stellt eine wirksame flüssigkeitsdichte Abdichtung des Gehäuseinnenraums 111 sicher und gewährleistet, dass keine Flüssigkeit aus dem Befüllkopf 100 unkontrolliert entweichen kann.

Zum Betanken eines Flüssigkeitstanks, insbesondere Harnstofftanks, in einem Fahrzeug wird ein in Fig. 1 nicht dargestelltes Zapfventil in eine Aufnahmeöffnung 117 des ersten Gehäuseteils 103-1 des Befüllkopfes 100 eingeführt, durch eine Aufnahme 116 eines Verbindungsstutzens 123 des dritten Gehäuseteils 103-3 eingeführt und anschließend betätigt. Durch das Zapfventil geförderte Flüssigkeit fließt dann aus dem Zapfventil in den Befüllkopf 100 und durch den Verbindungsstutzen 123 in den in Fig. 1 nicht gezeigten Flüssigkeitstank.

In dem zweiten Gehäuseteil 103-2 ist ein Auslassstutzen 119 gebildet, durch den beim Betanken die Flüssigkeit in Richtung des Flüssigkeitstanks fließt. Zu diesem Zweck ist an dem Auslassstutzen 119 beispielsweise ein in Fig. 1 nicht gezeigter Schlauch oder eine Flüssigkeitsleitung aufgesteckt, welche mit dem Flüssigkeitstanks verbunden ist.

Hierbei ist der Flüssigkeitstank insbesondere als ein Harnstofftank zur Aufnahme einer wässrigen Harnstofflösung ausgebildet, wobei die darin aufgenommene Harnstofflösung in einem Abgasreinigungsverfahren mittels selektiver katalytischer Reduktion (SCR) eingesetzt wird.

Durch den Befüllkopf 100 wird die sachgerechte Entlüftung beim Betanken auch bei hohen Befüllgeschwindigkeiten von bis zu 40 l/min sichergestellt und das Austreten der Flüssigkeit aus der Aufnahmeöffnung 117 wird verhindert. Aus dem Flüssigkeitstank hierbei verdrängte Luft wird in den Befüllkopf 100 eingeleitet. Die eingeleitete Luft wird in dem Befüllkopf 100 von der Flüssigkeit separiert, damit diese keine Flüssigkeit mitreißt und somit verhindert wird, dass Flüssigkeit durch die Aufnahmeöffnung 117 aus dem Befüllkopf 100 in Richtung eines Bedieners des Zapfventils austreten oder entweichen kann.

Hierzu ist in dem zweiten Gehäuseteil 103-2 ein Entlüftungsstutzen 121 gebildet, welcher sich insbesondere parallel zudem Verbindungsstutzen 123 und/oder zu dem Auslassstutzen 119 erstreckt. Durch den Entlüftungsstutzen 121 wird in den Befüllkopf 100 das Luftvolumen eingeleitet, das beim Zuführen von Flüssigkeit in den Flüssigkeitstank aus dem Flüssigkeitstank verdrängt wird, damit dieses dann über die Aufnahmeöffnung 117 des Befüllkopfes 100 ausgeleitet werden kann. Zu diesem Zweck ist beispielsweise ein in Fig. 1 nicht gezeigter Entlüftungsschlauch an dem Entlüftungsstutzen 121 angeschlossen, wobei der Entlüftungsschlauch fluidtechnisch mit dem Flüssigkeitstank verbunden ist. Die Aufnahmeöffnung 117 ist derart ausgebildet, dass bei einem in die Aufnahmeöffnung 117 aufgenommenen Zapfventil ein Entlüftungskanal um das Zapfventil herum entsteht. Dies wird beispielsweise durch ein Nutprofil erreicht, welches ein Inneres der Aufnahmeöffnung 117 umläuft. Der Entlüftungskanal im Inneren des Befüllkopfes 100 ist derart gestaltet, dass selbst bei einer Befüllgeschwindigkeit der Flüssigkeit von 40 l/min ebenfalls Luft mit einer Entlüftungsgeschwindigkeit von 40 l/min durch den Befüllkopf 100 entweichen kann.

Der Entlüftungsstutzen 121 erstreckt sich in der gleichen Richtung wie der Auslassstutzen 119, so dass ein raumsparender Einbau des Befüllkopfes 100 innerhalb des Fahrzeuges ermöglicht wird. Anschlussleitungen für den Entlüftungsstutzen 121 und den Auslassstutzen 119 können dann von der gleichen Richtung her aufgesteckt werden.

Im dritten Gehäuseteil 103-3 ist ein Verbindungsstutzen 123 gebildet, der das Zapfventil aufnimmt, positioniert und den Strahl der eingefüllten Flüssigkeit wirksam leiten kann. Der Verbindungsstutzen 123 ist insbesondere als ein Hohlzylinder ausgebildet und erstreckt sich von der dritten Gehäusewand 105-3 des dritten Gehäuseteils 103-3 aus in den Gehäuseinnenraum 111, und erstreckt sich hierbei insbesondere in den Bereich des zweiten Gehäuseteils 103-2. Der Verbindungsstutzen 123 ist jedoch ein integraler Bestandteil des dritten Gehäuseteils 103-3.

Beim Betanken strömt die verdrängte Luft über den Entlüftungsstutzen 121 in den Gehäuseinnenraum 111 ein und verursacht im Gehäuseinnenraum 111 einen leichten Überdruck. Dieser Überdruck wirkt als Luftpolster und drückt Flüssigkeit, die sich möglicherweise im Befüllkopf 100 befindet, in Richtung des Auslassstutzens 119.

Um einen Druckausgleich in dem Verbindungsstutzen 123 sicherzustellen, ist in dem Verbindungsstutzen 123 zumindest eine in Fig. 1 nur schematisch dargestellte Druckausgleichsöffnung 125 zum teilweise Ausleiten der durch den Entlüftungsstutzen 121 eingeleiteten Luft in das Innere des Gehäuses 103 angeordnet. Die Druckausgleichsöffnung 125 ist in der in Fig. 1 dargestellten Ansicht nur schematisch gezeigt. Die Größe und Form der Druckausgleichsöffnung 125 ist derart gewählt, dass kein Rückstau an Luft, bzw. kein Unterdruck im Verbindungsstutzen 123 entsteht, und dass aufgrund von in den Gehäuseinnenraum 111 eindringender Flüssigkeit es nicht zu einer Frühabschaltung des Zapfventils kommt, so dass keine Flüssigkeit aus dem Befüllkopf 100 austreten kann. Die Position der Druckausgleichsöffnung 125 ist derart gewählt, dass zum einen Luft solange wie möglich entweichen kann und zum anderen ein Austritt von Flüssigkeit verhindert werden kann. Dementsprechend sind Position, Höhe, Breite der Druckausgleichsöffnung 125 aufeinander abgestimmt.

Die zumindest eine Druckausgleichsöffnung 125 ist beispielsweise durch eine kreisförmige, V-förmige und/oder U-förmige Druckausgleichsöffnung 125 in dem Verbindungsstutzen 123 gebildet, wobei die Druckausgleichsöffnung 125 insbesondere im Bereich der dritten Gehäusewand 105-3 in dem Verbindungsstutzen 123 angeordnet ist. Dadurch kann Flüssigkeit in dem Gehäuseinnenraum 111 aufsteigen, während die durch den Entlüftungsstutzen 121 ausgeleitete Luft möglichst lange aus dem Befüllkopf 100 entweichen kann.

Hierbei ist die Druckausgleichsöffnung 125 insbesondere als eine sich verjüngende Druckausgleichsöffnung 125 ausgebildet ist, welche sich von einem der Aufnahmeöffnung 117 zugewandten Ende 124 der Druckausgleichsöffnung 125 zu einer dem Entlüftungsstutzen 121 zugewandten Ende 126 der Druckausgleichsöffnung 125 verjüngt. Dadurch kann eine vorteilhafte Luftausleitung aus der Druckausgleichsöffnung 125 sichergestellt werden, und es kann gleichzeitig wirksam verhindert werden, dass Flüssigkeit durch die Druckausgleichsöffnung 125 austritt.

An einer Außenseite 127 des Verbindungsstutzens 123 ist ein Abstandselement 129 zum Erzeugen eines Entlüftungskanales im Bereich der Druckausgleichsöffnung 125 angeordnet. Das Abstandselement 129 umfasst insbesondere Längsrippen, welche die Stabilität des Verbindungsstutzens 123 verbessern. Das Abstandselement 129 dient der Beabstandung der Druckausgleichsöffnung 125 von der dritten Gehäusewand 105-3, so dass sich zwischen dem Verbindungsstutzen 123 und der dritten Gehäusewand 105-3 im Bereich der Druckausgleichsöffnung 125 ein vorteilhafter Entlüftungskanal gebildet wird.

Die Gehäuseteile 103-1, 103-2 und 103-3 sind beispielsweise Kunststoff- oder Spritzgussformteile aus Polyamid (PA), Polyoxymethylen (POM), Polyolefin oder thermoplastischen Elastomeren auf Olefinbasis. Die Fertigung der Gehäuseteile 103-1, 103-2 und 103-3 aus diesen Materialien ist besonders vorteilhaft, da hierdurch eine hohe Festigkeit und Stabilität des Befüllkopfes 100 erreicht wird.

An einem unteren, dem Auslassstutzen 119 zugewandten, Ende des Verbindungsstutzens 123 ist ein Schwallelement 131 angeordnet, das eine zurückströmende Flüssigkeit abbremst und verhindert, dass der Gehäuseinnenraum 111 des Befüllkopfes 100 vollständig geflutet wird. Das Schwallelement 131 ist als separates Teil an dem Verbindungsstutzen 123 im Befüllkopf 100 befestigt. Somit ist es möglich die Abstimmung auf verschiedene Tanksysteme vorzunehmen und ein Baukastensystem zu erstellen.

An der Außenseite 127 des Verbindungsstutzens 123 ist eine Aussparung 133 gebildet, in die ein in Fig. 1 nicht gezeigter Vorsprung des Schwallelementes 131 eingesetzt wird. Die Aussparung 133 ist an dem unteren Ende des Verbindungsstutzens 123 gebildet und ermöglicht ein Aufschieben des Schwallelementes 131 entlang einer Längsrichtung des Verbindungsstutzens 123. Zusätzlich ist die Aussparung 133 derart gebildet, dass das Schwallelement 131 nach dem Aufschieben in die Aussparung 133 durch eine Drehung an dem Verbindungsstutzen 123 fixiert werden kann. Die Aussparung 133 kann derart gestaltet sein, dass eine Befestigung des Schwallelementes 131 an dem Verbindungsstutzen 123 insbesondere mittels eines Bajonettverschlusses erreicht wird. Weiter kann in der Aussparung 133 ein Rastsystem vorgesehen sein, das ein Lösen des Schwallelementes 131 verhindert und die Montagestellung des modularen Schwallelementes 131 verhindert.

An dem insbesondere als Längsrippen ausgebildeten Abstandselement 129 ist ein Anschlag gebildet, an welchem das Schwallelement 131 anliegt. Dadurch wird das Schwallelement 131 zusätzlich in seiner Lage stabilisiert und unterstützt, so dass ein Verrutschen des Schwallelementes 131 im Inneren des Befüllkopfes 100 verhindert werden kann.

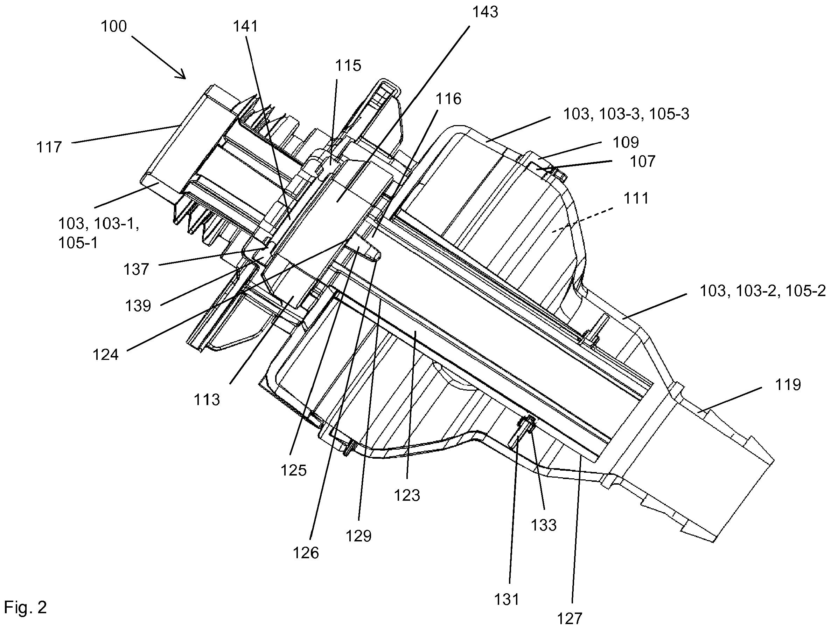

Fig. 2 zeigt eine Querschnittsansicht eines Befüllkopfes 100.

Das Gehäuse 103 des Befüllkopfes 100 umfasst ein erstes Gehäuseteil 103-1, ein zweites Gehäuseteil 103-2 und ein drittes Gehäuseteil 103-3. Hierbei ist das dritte Gehäuseteil 103-3 zwischen dem ersten Gehäuseteil 103-1 und dem zweiten Gehäuseteil 103-2 angeordnet, und ist das dritte Gehäuseteil 103-3 mit dem ersten Gehäuseteil 103-1 und dem zweiten Gehäuseteil 103-2 verbunden.

Das erste Gehäuseteil 103-1 weist eine erste Gehäusewand 105-1 auf. Das zweite Gehäuseteil 103-2 weist eine zweite Gehäusewand 105-2 auf. Das dritte Gehäuseteil 103-3 weist eine dritte Gehäusewand 105-3 auf. Die zweite Gehäusewand 105-2 weist einen Einführabschnitt 107 auf, welcher in einen Aufnahmeabschnitt 109 der dritten Gehäusewand 105-3 einführbar ist. Somit begrenzen die zweite Gehäusewand 105-2 und die dritte Gehäusewand 105-3 einen in Fig. 1 nur schematisch dargestellten Gehäuseinnenraum 111.

An einer dem ersten Gehäuseteil 103-1 zugewandten Seite der zweiten Gehäusewand 105-2 schließt die erste Gehäusewand 105-1 des ersten Gehäuseteils 103-1 den Gehäuseinnenraum 111 ab.

Zwischen dem zweiten Gehäuseteil 103-2 und dem ersten Gehäuseteil 103-1 ist ein Ringmagnet 113 zum Freigeben einer Zapfventilautomatik eines Zapfventils angeordnet. Zwischen dem Ringmagnet 113 und dem ersten Gehäuseteil 103-1 ist ein Dichtungsring 115 angeordnet. Der Dichtungsring 115 weist insbesondere eine umlaufende Dichtungsrippe 137 auf, welche sich von einem Ringrand 139 des Dichtungsrings 115 in eine Dichtungsöffnung 141 des Dichtungsrings 115 erstreckt.

Ein in Fig. 2 nicht dargestelltes Zapfventil wird durch eine Aufnahmeöffnung 117 des ersten Gehäuseteils 103-1, durch die Dichtungsöffnung 141 in dem Dichtungsring 115, durch eine Magnetöffnung 143 in dem Ringmagnet 113 und durch eine Aufnahme 116 des Verbindungsstutzens 123 in den Verbindungsstutzen 123 des dritten Gehäuseteils 103-3 eingeführt, um die von dem Zapfventil abgegebene Flüssigkeit durch den Verbindungsstutzen 123 zu leiten.

Ferner weist das zweite Gehäuseteil 103-2 einen Auslassstutzen 119 zum Auslassen der zugeführten Flüssigkeit aus dem Befüllkopf 100 auf und weist das zweite Gehäuseteil 103-2 einen in der in Fig. 2 nicht sichtbaren Entlüftungsstutzen 121 zum Entlüften des Befüllkopfes 100 auf.

An einer Außenseite 127 des Verbindungsstutzens 123 ist zumindest eine Druckausgleichsöffnung 125, insbesondere eine im Querschnitt kreisförmige, V-förmige und/oder U-förmige Druckausgleichsöffnung 125 in dem Verbindungsstutzen 123, gebildet. Die Druckausgleichsöffnung 125 ist an einem dem ersten Gehäuseteil 103-1 zugewandten Ende des Verbindungsstutzens 123 angeordnet. Dadurch kann Flüssigkeit in dem Gehäuseinnenraum 111 aufsteigen, während die durch den Entlüftungsstutzen 121 eingeführte Luft möglichst lange durch die Druckausgleichsöffnung 125 entweichen kann.

An einer Außenseite 127 des Verbindungsstutzens 123 ist ein Abstandselement 129, insbesondere Längsrippen, zum Erzeugen eines Entlüftungskanales im Bereich der Druckausgleichsöffnung 125 angeordnet.

Am unteren Ende des Verbindungsstutzens 123 ist ein Schwallelement 131 angeordnet, das eine zurückströmende Flüssigkeit abbremst und verhindert, dass der Gehäuseinnenraum 111 des Befüllkopfes 100 vollständig geflutet wird. Das Schwallelement 131 weist einen Vorsprung auf, welcher in eine Aussparung 133 des Verbindungsstutzens 123 eingeführt ist, um das Schwallelement 131 mit dem Verbindungsstutzen 123 zu verbinden.

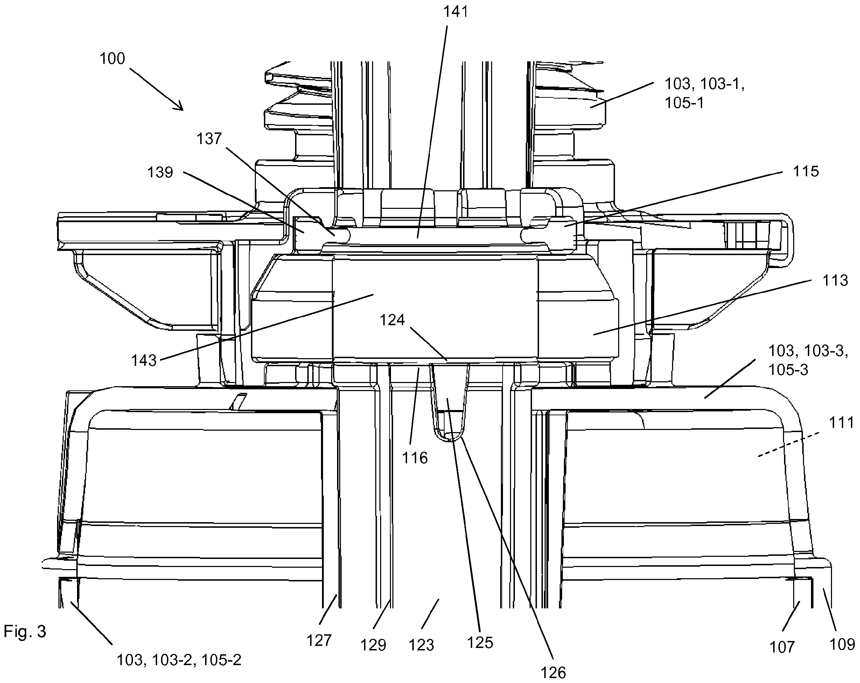

Fig. 3 zeigt eine vergrößerte Querschnittsansicht des in Fig. 2 dargestellten Befüllkopfes 100.

Das in Fig. 3 dargestellte erste Gehäuseteil 103-1 des Gehäuses 103 ist nur abschnittsweise dargestellt. Die zweite Gehäusewand 105-2 des zweiten Gehäuseteils 103-2 weist einen Einführabschnitt 107 auf, welcher in einen Aufnahmeabschnitt 109 der dritten Gehäusewand 105-3 des dritten Gehäuseteils 103-3 eingeführt ist. Somit begrenzen die zweite Gehäusewand 105-2 und die dritte Gehäusewand 105-3 einen in Fig. 1 nur schematisch dargestellten Gehäuseinnenraum 111.

Zwischen dem zweiten Gehäuseteil 103-2 und dem ersten Gehäuseteil 103-1 ist ein Ringmagnet 113 zum Freigeben einer Zapfventilautomatik eines Zapfventils angeordnet. Zwischen dem Ringmagnet 113 und dem ersten Gehäuseteil 103-1 ist ein Dichtungsring 115 angeordnet. Der Dichtungsring 115 weist insbesondere eine umlaufende Dichtungsrippe 137 auf, welche sich von einem Ringrand 139 des Dichtungsrings 115 in die Dichtungsöffnung 141 des Dichtungsrings 115 erstreckt.

Ein in Fig. 3 nicht dargestelltes Zapfventil wird durch eine in Fig. 3 nicht dargestellte Aufnahmeöffnung 117 des ersten Gehäuseteils 103-1, durch eine Dichtungsöffnung 141 in dem Dichtungsring 115, durch eine Magnetöffnung 143 in dem Ringmagnet 113, und durch eine Aufnahme 116 des Verbindungsstutzens 123 in den Verbindungsstutzen 123 des dritten Gehäuseteils 103-3 eingeführt, um Flüssigkeit durch den Verbindungsstutzen 123 in Richtung des Flüssigkeitstanks zu leiten

Ferner weist das Gehäuse 103 noch einen in Fig. 3 nicht dargestellten Auslassstutzen 119 zum Auslassen der zugeführten Flüssigkeit aus dem Befüllkopf 100 auf und einen in der in Fig. 3 nicht sichtbaren Entlüftungsstutzen 121 zum Entlüften des Befüllkopfes 100 auf.

An einer Außenseite 127 des Verbindungsstutzens 123 ist zumindest eine Druckausgleichsöffnung 125, beispielsweise als eine kreisförmige, V-förmige und/oder U-förmige Druckausgleichsöffnung 125 gebildet, welche sich insbesondere von einem der Aufnahmeöffnung 117 zugewandten Ende 124 zu einem dem Entlüftungsstutzen 121 zugewandten Ende 126 verjüngt. Dadurch kann Flüssigkeit in dem Gehäuseinnenraum 111 aufsteigen, während die durch den Entlüftungsstutzen 121 ausgeleitete Luft möglichst lange durch die Druckausgleichsöffnung 125 entweichen kann.

An einer Außenseite 127 des Verbindungsstutzens 123 ist ein Abstandselement 129, insbesondere Längsrippen, zum Erzeugen eines Entlüftungskanales im Bereich der Druckausgleichsöffnung 125 angeordnet. Ein Schallelement 131 ist in Fig. 3 nicht dargestellt.

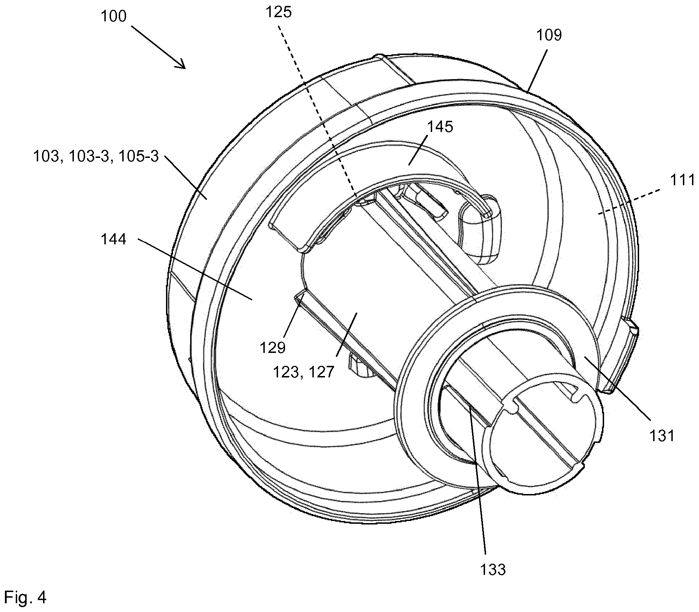

Fig. 4 zeigt eine Unteransicht eines dritten Gehäuseteils des in Fig. 1 dargestellten Befüllkopfes gemäß einer weiteren Ausführungsform. Für die detaillierte Ausgestaltung des Befüllkopfes wird auf die Ausführungen in der Fig. 1 verwiesen.

An einer Innenseite 144 des dritten Gehäuseteils 103-3 des Gehäuses 103 des Befüllkopfes 100 ist der Verbindungsstutzen 123 geformt. Um einen Druckausgleich in dem Verbindungsstutzen 123 sicherzustellen, ist in dem Verbindungsstutzen 123 zumindest eine Druckausgleichsöffnung 125 angeordnet. An einer Außenseite 127 des Verbindungsstutzens 123 ist ein Abstandselement 129 zum Erzeugen eines Entlüftungskanales im Bereich der Druckausgleichsöffnung 125 angeordnet. Da die Druckausgleichsöffnung 125 in der in Fig. 4 dargestellten Ansicht nicht einsehbar ist, ist die Druckausgleichsöffnung 125 in der Fig. 4 nur schematisch angedeutet.

An einem unteren, dem Auslassstutzen 119 zugewandten, Ende des Verbindungsstutzens 123 ist ein Schwallelement 131 angeordnet, welche zurückströmende Flüssigkeit abbremst. An der Außenseite 127 des Verbindungsstutzens 123 ist eine Aussparung 133 gebildet, in die ein Vorsprung des Schwallelementes 131 eingesetzt wird. Die Aussparung 133 ist an dem unteren Ende des Verbindungsstutzens 123 gebildet und ermöglicht ein Aufschieben des Schwallelementes 131 entlang einer Längsrichtung des Verbindungsstutzens 123.

An der Innenseite 144 des dritten Gehäuseteils 103-3 ist eine Deflektorwand 145 geformt, wobei sich die Deflektorwand 145 zumindest abschnittsweise entlang der Längsachse des Verbindungsstutzens 123 erstreckt und die zumindest eine Druckausgleichsöffnung 125 zumindest teilweise umschließt, um ein Eindringen von Flüssigkeit in die Druckausgleichsöffnung 125 zu verhindern. Die Deflektorwand 145 ist hierbei insbesondere als eine gebogene Deflektorwand 145 ausgebildet, welche die Innenseite 144 des dritten Gehäuseteils 103-3 zumindest abschnittsweise umläuft. Durch die Deflektorwand 145 kann sicherstellt werden, dass durch den Auslassstutzen 119 in einen Gehäuseinnenraum 111 des Gehäuses 103 des Befüllkopfes 100 eindringende Flüssigkeit nicht unkontrolliert in die Druckausgleichsöffnung 125 eindringen kann, sondern durch die Deflektorwand 145 aufgehalten und abgeleitet werden kann.

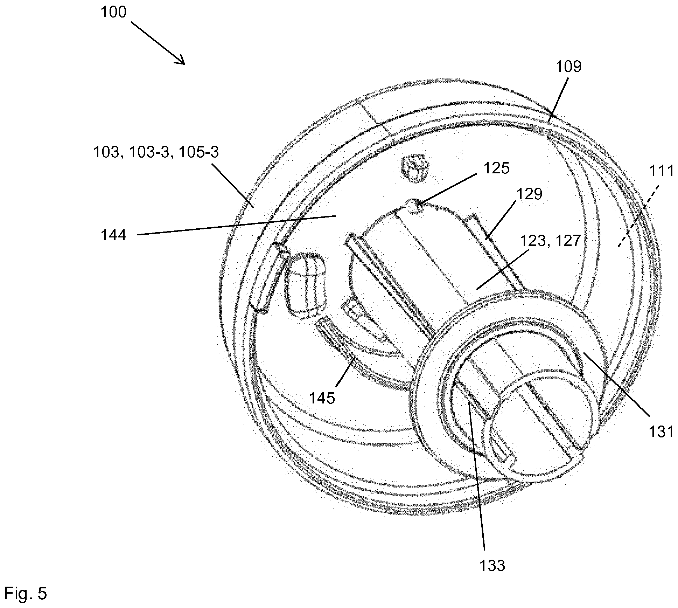

Fig. 5 zeigt eine weitere Ansicht des in Fig. 4 dargestellten Befüllkopfes. In der in Fig. 5 dargestellten weiteren Ansicht ist die Druckausgleichsöffnung 125 einsehbar und markiert. Für die weiteren Merkmale wird auf die Ausführungen in Bezug auf die Fig. 4 verwiesen.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Befüllkopf
- 103: Gehäuse
- 103-1: Erstes Gehäuseteil
- 103-2: Zweites Gehäuseteil
- 103-3: Drittes Gehäuseteil
- 105-1: Erste Gehäusewand
- 105-2: Zweite Gehäusewand
- 105-3: Dritte Gehäusewand
- 107: Einführabschnitt
- 109: Aufnahmeabschnitt
- 111: Gehäuseinnenraum
- 113: Ringmagnet
- 115: Dichtungsring
- 116: Aufnahme des Verbindungsstutzens
- 117: Aufnahmeöffnung
- 119: Auslassstutzen
- 121: Entlüftungsstutzen
- 123: Verbindungsstutzen
- 124: Der Aufnahmeöffnung zugewandtes Ende der Druckausgleichsöffnung
- 125: Druckausgleichsöffnung
- 126: Dem Entlüftungsstutzen zugewandtes Ende der Druckausgleichsöffnung
- 127: Außenseite des Verbindungsstutzens
- 129: Abstandselement
- 131: Schwallelement
- 133: Aussparung
- 137: Dichtungsrippe
- 139: Ringrand
- 141: Dichtungsöffnung
- 143: Magnetöffnung
- 144: Innenseite des dritten Gehäuseteils
- 145: Deflektorwand

## Patentansprüche

1. Befüllkopf (100) für einen Flüssigkeitstank in einem Fahrzeug, mit:
einem Gehäuse (103), das ein erstes Gehäuseteil (103-1), ein zweites Gehäuseteil (103-2) und ein drittes Gehäuseteil (103-3) aufweist, wobei das dritte Gehäuseteil (103-3) mit dem ersten Gehäuseteil (103-1) und mit dem zweiten Gehäuseteil (103-2) verbunden ist,
wobei in dem ersten Gehäuseteil (103-1) eine Aufnahmeöffnung (117) gebildet ist, wobei in die Aufnahmeöffnung (117) ein Zapfventil zum Einlassen von Flüssigkeit einführbar ist, wobei in dem zweiten Gehäuseteil (103-2) ein Entlüftungsstutzen (121) zum Einleiten von Luft in das Innere des Gehäuses (103) gebildet ist,
wobei in dem dritten Gehäuseteil (103-3) ein Verbindungsstutzen (123) zum Leiten von Flüssigkeit gebildet ist, wobei der Verbindungsstutzen (123) in dem Gehäuse (103) zwischen dem dritten Gehäuseteil (103-3) und dem zweiten Gehäuseteil (103-2) angeordnet ist, und wobei der Verbindungsstutzen (123) zumindest eine Druckausgleichsöffnung (125) zum Druckausgleich in dem Verbindungsstutzen (123) umfasst, und **dadurch gekennzeichnet, dass** an einer Innenseite des dritten Gehäuseteils (103-3) eine Deflektorwand (145) geformt ist, wobei sich die Deflektorwand (145) zumindest abschnittsweise entlang einer Längsachse des Verbindungsstutzens (123) erstreckt und die zumindest eine Druckausgleichsöffnung (125) zumindest teilweise umschließt, um ein Eindringen von Flüssigkeit in die Druckausgleichsöffnung (125) zu verhindern,
wobei die Deflektorwand (145) in einem Gehäuseinnenraum (111) des Befüllkopfes (100) auf einer gegenüberliegenden Seite des Entlüftungsstutzens (121) angeordnet ist, um aufwallende Flüssigkeit vom Entlüftungspfad abzuleiten.

2. Befüllkopf (100) nach Anspruch 1, wobei die zumindest eine Druckausgleichsöffnung (125) des Verbindungsstutzens (123) als eine im Querschnitt kreisförmige, V-förmige und/oder U-förmige Druckausgleichsöffnung (125) ausgebildet ist, wobei die Druckausgleichsöffnung insbesondere als eine sich verjüngende Druckausgleichsöffnung (125) ausgebildet ist, welche sich von einem der Aufnahmeöffnung (117) zugewandten Ende (124) der Druckausgleichsöffnung (125) zu einem dem Entlüftungsstutzen (121) zugewandten Ende (126) der Druckausgleichsöffnung (125) verjüngt.

3. Befüllkopf (100) nach Anspruch 1 oder 2, wobei das dritte Gehäuseteil (103-3) eine dritte Gehäusewand (105-3) aufweist, wobei das zweite Gehäuseteil (103-2) eine zweite Gehäusewand (105-2) aufweist, wobei die dritte Gehäusewand (105-3) und die zweite Gehäusewand (105-2) miteinander verbunden sind und einen Gehäuseinnenraum (111) begrenzen, wobei sich der Verbindungsstutzen (123) von der dritten Gehäusewand (105-3) aus in den Gehäuseinnenraum (111) erstreckt, und wobei die Druckausgleichsöffnung (125) des Verbindungsstutzens (123) insbesondere im Bereich der dritten Gehäusewand (105-3) angeordnet ist.

4. Befüllkopf (100) nach einem der vorangehenden Ansprüche, wobei das zweite Gehäuseteil (103-2) oder das dritte Gehäuseteil (103-3) einen Einführabschnitt (107) aufweist, welcher in einen Aufnahmeabschnitt (109) des dritten Gehäuseteils (103-3) oder des zweiten Gehäuseteils (103-2) einführbar ist, um das zweite Gehäuseteil (103-2) und das dritte Gehäuseteil (103-3) miteinander zu verbinden.

5. Befüllkopf (100) nach einem der vorangehenden Ansprüche, wobei der Verbindungsstutzen (123) als ein Hohlzylinder oder als ein Hohlkonus gebildet ist.

6. Befüllkopf (100) nach einem der vorangehenden Ansprüche, wobei an einer Außenseite (127) des Verbindungsstutzens (123) zumindest ein Abstandselement (129) gebildet ist, wobei das Abstandselement (129) geformt ist, einen Entlüftungskanal im Bereich der Druckausgleichsöffnung (125) zu bilden.

7. Befüllkopf (100) nach Anspruch 6, wobei das Abstandselement (129) durch eine Längsrippe (129) gebildet wird, die sich zumindest abschnittsweise entlang einer Längsachse des Verbindungsstutzens (123) erstreckt.

8. Befüllkopf (100) nach einem der vorangehenden Ansprüche, wobei sich der Entlüftungsstutzen (121) parallel zum Verbindungsstutzen (123) erstreckt.

9. Befüllkopf (100) nach einem der vorangehenden Ansprüche, wobei der Befüllkopf (100) einen Ringmagneten (113) umfasst, welcher ausgebildet ist, eine Zapfventilautomatik des Zapfventils freizugeben, und wobei der Ringmagnet (113) insbesondere aus einem magnetischen Kunststoffmaterial gebildet ist.

10. Befüllkopf (100) nach Anspruch 9, wobei der Ringmagnet (113) zwischen dem ersten Gehäuseteil (103-1) und dem dritten Gehäuseteil (103-3) angeordnet ist, wobei der Ringmagnet (113) eine Magnetöffnung (143) aufweist, wobei das Zapfventil durch die Magnetöffnung (143) in eine Aufnahme (116) des Verbindungsstutzens (123) einführbar ist, und wobei der Ringmagnet (113) insbesondere als ein in Richtung des ersten Gehäuseteils (103-1) konisch zulaufender Ringmagnet (113) ausgebildet ist.

11. Befüllkopf (100) nach Anspruch 9 oder 10, wobei der Befüllkopf (100) einen Dichtungsring (115) aufweist, wobei der Dichtungsring (115) zwischen dem Ringmagneten (113) und dem ersten Gehäuseteil (103-1) angeordnet ist, wobei der Dichtungsring (115) eine Dichtungsöffnung (141) aufweist, und wobei das Zapfventil durch die Dichtungsöffnung (141) in eine Aufnahme (116) des Verbindungsstutzens (123) einführbar ist.

12. Befüllkopf (100) nach Anspruch 11, wobei der Dichtungsring (115) einen Ringrand (139) und eine umlaufende Dichtungsrippe (137) aufweist, wobei sich die umlaufende Dichtungsrippe (137) von dem Ringrand (139) aus umlaufend in die Dichtungsöffnung (141) erstreckt.

13. Befüllkopf (100) nach einem der vorangehenden Ansprüche, wobei der Verbindungsstutzen (123) ein Schwallelement (131), insbesondere ein ringförmiges Schwallelement (131), umfasst, das mit dem Verbindungsstutzen (123) verbindbar ist.

14. Befüllkopf (100) nach Anspruch 13, wobei an einer Außenseite (127) des Verbindungsstutzens (123) eine Aussparung (133) gebildet ist, wobei das Schwallelement (131) einen Vorsprung aufweist, wobei der Vorsprung in die Aussparung (133) einführbar ist, um das Schwallelement (131) mit dem Verbindungsstutzen (123) zu verbinden, und wobei das Schwallelement (131) insbesondere durch eine Bajonett-Verbindung mit dem Verbindungsstutzen (123) verbindbar ist.

15. Befüllkopf (100) nach Anspruch 13 oder 14, wobei an einer Außenseite (127) des Verbindungsstutzens (123) zumindest eine Längsrippe (129) gebildet ist, welche sich zumindest abschnittsweise entlang einer Längsachse des Verbindungsstutzens (123) erstreckt, wobei die Längsrippe (129) insbesondere einen Anschlag für das mit dem Verbindungsstutzen (123) verbundene Schwallelement (131) aufweist.

## Claims

1. Filling head (100) for a liquid tank in a vehicle, comprising:
a housing (103) which comprises a first housing part (103-1), a second housing part (103-2) and a third housing part (103-3), wherein the third housing part (103-3) is connected to the first housing part (103-1) and the second housing part (103-2),
wherein a receiving opening (117) is formed in the first housing part (103-1), wherein a nozzle valve for introducing liquid is insertable into the receiving opening (117), wherein a venting nozzle (121) is formed in the second housing part (103-2) for introducing air into the interior of the housing (103),
wherein in the third housing part (103-3) a connection nozzle (123) for guiding liquid is formed, wherein the connection nozzle (123) is arranged in the housing (103) between the third housing part (103-3) and the second housing part (103-2), and wherein the connection nozzle (123) comprises at least one pressure equalization opening (125) for pressure equalization in the connection nozzle (123), and
**characterized in that**
a deflector wall (145) is formed on an inner side of the third housing part (103-3), wherein the deflector wall (145) extends at least partially along a longitudinal axis of the connection nozzle (123) and encloses the at least one pressure equalization opening (125) at least partially in order to prevent an intrusion of liquid into the pressure equalization opening (125),
wherein the deflector wall (145) is arranged in a housing interior (111) of the filling head (100) at an opposite side of the venting nozzle (121) in order to divert billowing liquid from the venting path.

2. Filling head (100) according to claim 1, wherein the at least one pressure equalization opening (125) of the connection nozzle (123) is configured as a cross-sectionally circular, V-shaped and/or U-shaped pressure equalization opening (125), wherein the pressure equalization opening is in particular formed as a tapering pressure equalization opening (125) which tapers from an end (124) of the pressure equalization opening (125) facing the receiving opening (117) to an end (126) of the pressure equalization opening (125) facing the venting nozzle (121).

3. Filling head (100) according to claim 1 or 2, wherein the third housing part (103-3) comprises a third housing wall (105-3), wherein the second housing part (103-2) comprises a second housing wall (105-2), wherein the third housing wall (105-3) and the second housing wall (105-2) are connected to one another and limit a housing interior (111), wherein the connection nozzle (123) extends from the third housing wall (105-3) into the housing interior (111), and wherein the pressure equalization opening (125) of the connection nozzle (123) is arranged in particular in the area of the third housing wall (105-3).

4. Filling head (100) according to one of the preceding claims, wherein the second housing part (103-2) or the third housing part (103-3) comprise an insertion section (107) which is insertable into a receiving section (109) of the third housing part (103-3) or the second housing part (103-2) in order to connect the second housing part (103-2) and the third housing part (103-3) to one another.

5. Filling head (100) according to one of the preceding claims, wherein the connection nozzle (123) is formed as a hollow cylinder or as a hollow cone.

6. Filling head (100) according to one of the preceding claims, wherein at least one spacer element (129) is formed at an outer side (127) of the connection nozzle (123), wherein the spacer element (129) is shaped to form a ventilation channel in the area of the pressure equalization opening (125).

7. Filling head (100) according to claim 6, wherein the spacer element (129) is formed by a longitudinal rib (129) which extends at least partially along a longitudinal axis of the connection nozzle (123).

8. Filling head (100) according to one of the preceding claims, wherein the venting nozzle (121) extends parallel to the connection nozzle (123).

9. Filling head (100) according to one of the preceding claims, wherein the filling head (100) comprises a ring magnet (113) which is configured to release a nozzle valve automatic of the nozzle valve, and wherein the ring magnet (113) is formed in particular from a magnetic plastic material.

10. Filling head (100) according to claim 9, wherein the ring magnet (113) is arranged between the first housing part (103-1) and the third housing part (103-3), wherein the ring magnet (113) comprises a magnet opening (143), wherein the nozzle valve is insertable through the magnet opening (143) into a receptacle (116) of the connection nozzle (123), and wherein the ring magnet (113) is configured in particular as a ring magnet (113) which tapers conically in the direction of the first housing part (103-1).

11. Filling head (100) according to claim 9 or 10, wherein the filling head (100) comprises a sealing ring (115), wherein the sealing ring (115) is arranged between the ring magnet (113) and the first housing part (103-1), wherein the sealing ring (115) comprises a sealing opening (141), and wherein the nozzle valve is insertable through the sealing opening (141) into a receptacle (116) of the connection nozzle (123).

12. Filling head (100) according to claim 11, wherein the sealing ring (115) comprises an annular rim (139) and a circumferential sealing rib (137), wherein the circumferential sealing rib (137) extends circumferentially from the annular rim (139) into the sealing opening (141).

13. Filling head (100) according to one of the preceding claims, wherein the connection nozzle (123) comprises a surge element (131), in particular an annular surge element (131), which is connectable to the connection nozzle (123).

14. Filling head (100) according to claim 13, wherein a recess (133) is formed at an outer side (127) of the connection nozzle (123), wherein the surge element (131) comprises a projection, wherein the projection is insertable into the recess (133) in order to connect the surge element (131) to the connection nozzle (123), and wherein the surge element (131) in particular is connectable to the connection nozzle (123) by a bayonet connection.

15. Filling head (100) according to claim 13 or 14, wherein at an outer side (127) of the connection nozzle (123) at least one longitudinal rib (129) is formed, which extends at least partially along a longitudinal axis of the connection nozzle (123), wherein the longitudinal rib (129) in particular comprises a stop for the surge element (131) connected to the connection nozzle (123).

## Revendications

1. Tête de remplissage (100) pour un réservoir de liquide dans un véhicule, comportant :
un boîtier (103) qui comprend une première partie de boîtier (103-1), une deuxième partie de boîtier (103-2) et une troisième partie de boîtier (103-3), la troisième partie de boîtier (103-3) étant reliée à la première partie de boîtier (103-1) et à la deuxième partie de boîtier (103-2),
une ouverture de logement (117) étant formée dans la première partie le boîtier (103-1), un pistolet distributeur servant à l'entrée de liquide pouvant être inséré dans l'ouverture de logement (117), une tubulure d'aération (121) servant à l'introduction d'air dans l'intérieur du boîtier (103) étant formée dans la deuxième partie de boîtier (103-2),
une tubulure de liaison (123) servant au guidage de liquide étant formée dans la troisième partie de boîtier (103-3), la tubulure de liaison (123) étant disposée dans le boîtier (103) entre la troisième partie de boîtier (103-3) et la deuxième partie de boîtier (103-2), et la tubulure de liaison (123) comportant au moins une ouverture de compensation de pression (125) servant à la compensation de pression dans la tubulure de liaison (123), et
**caractérisée en ce qu'**une paroi déflectrice (145) est façonnée sur un côté intérieur de la troisième partie de boîtier (103-3), la paroi déflectrice (145) s'étendant au moins dans certaines parties le long d'un axe longitudinal de la tubulure de liaison (123) et entourant au moins partiellement l'au moins une ouverture de compensation de pression (125), afin d'empêcher une infiltration de liquide dans l'ouverture de compensation de pression (125),
la paroi déflectrice (145) étant disposée dans un espace intérieur de boîtier (111) de la tête de remplissage (100) sur un côté opposé de la tubulure d'aération (121), afin d'évacuer du trajet d'aération du liquide jaillissant vers le haut.

2. Tête de remplissage (100) selon la revendication 1, l'au moins une ouverture de compensation de pression (125) de la tubulure de liaison (123) étant réalisée sous la forme d'une ouverture de compensation de pression (125) circulaire, en forme de V et/ou en forme de U en section transversale, l'ouverture de compensation de pression étant réalisée en particulier sous la forme d'une ouverture de compensation de pression (125) se rétrécissant, laquelle se rétrécit d'une extrémité (124) de l'ouverture de compensation de pression (125) tournée vers l'ouverture de logement (117) à une extrémité (126) de l'ouverture de compensation de pression (125) tournée vers la tubulure d'aération (121).

3. Tête de remplissage (100) selon la revendication 1 ou 2, la troisième partie de boîtier (103-3) comprenant une troisième paroi de boîtier (105-3), la deuxième partie de boîtier (103-2) comprenant une deuxième paroi de boîtier (105-2), la troisième paroi de boîtier (105-3) et la deuxième paroi de boîtier (105-2) étant reliées l'une à l'autre et délimitant dans un espace intérieur de boîtier (111), la tubulure de liaison (123) s'étendant à partir de la troisième paroi de boîtier (105-3) dans l'espace intérieur de boîtier (111), et l'ouverture de compensation de pression (125) de la tubulure de liaison (123) étant disposée en particulier dans la région de la troisième paroi de boîtier (105-3).

4. Tête de remplissage (100) selon l'une des revendications précédentes, la deuxième partie de boîtier (103-2) ou la troisième partie de boîtier (103-3) comprenant une section d'insertion (107), laquelle peut être insérée dans une section de logement (109) de la troisième partie de boîtier (103-3) ou de la deuxième partie le boîtier (103-2), afin de relier la deuxième partie de boîtier (103-2) et la troisième partie de boîtier (103-3) l'une à l'autre.

5. Tête de remplissage (100) selon l'une des revendications précédentes, la tubulure de liaison (123) étant formée comme un cylindre creux ou comme un cône creux.

6. Tête de remplissage (100) selon l'une des revendications précédentes, au moins un élément d'espacement (129) étant formé sur un côté extérieur (127) de la tubulure de liaison (123), l'élément d'espacement (129) étant façonné pour former un canal d'aération dans la région de l'ouverture de compensation de pression (125) .

7. Tête de remplissage (100) selon la revendication 6, l'élément d'espacement (129) étant formé par une nervure longitudinale (129) qui s'étend au moins dans certaines parties le long d'un axe longitudinal de la tubulure de liaison (123).

8. Tête de remplissage (100) selon l'une des revendications précédentes, la tubulure d'aération (121) s'étendant parallèlement à la tubulure de liaison (123).

9. Tête de remplissage (100) selon l'une des revendications précédentes, la tête de remplissage (100) comportant un aimant annulaire (113), lequel est réalisé pour débloquer un mécanisme automatique du pistolet distributeur, et l'aimant annulaire (113) étant formé en particulier à partir d'une matière synthétique magnétique.

10. Tête de remplissage (100) selon la revendication 9, l'aimant annulaire (113) étant disposé entre la première partie de boîtier (103-1) et la troisième partie de boîtier (103-3), l'aimant annulaire (113) comprenant une ouverture d'aimant (143), le pistolet distributeur pouvant être inséré à travers l'ouverture d'aimant (143) dans un logement (116) de la tubulure de liaison (123), et l'aimant annulaire (113) étant réalisé en particulier sous la forme d'un aimant annulaire (113) se terminant de manière conique en direction de la première partie de boîtier (103-1).

11. Tête de remplissage (100) selon la revendication 9 ou 10, la tête de remplissage (100) comprenant une bague d'étanchéité (115), la bague d'étanchéité (115) étant disposée entre l'aimant annulaire (113) et la première partie de boîtier (103-1), la bague d'étanchéité (115) comprenant une ouverture d'étanchéité (141), et le pistolet distributeur pouvant être inséré à travers l'ouverture d'étanchéité (141) dans un logement (116) de la tubulure de liaison (123).

12. Tête de remplissage (100) selon la revendication 11, la bague d'étanchéité (115) comprenant un bord de bague (139) et une nervure d'étanchéité (137) périphérique, la nervure d'étanchéité (137) périphérique s'étendant à partir du bord de bague (139) de manière périphérique dans l'ouverture d'étanchéité (141).

13. Tête de remplissage (100) selon l'une des revendications précédentes, la tubulure de liaison (123) comportant un élément brise-flot (131), en particulier un élément brise-flot (131) annulaire qui peut être relié à la tubulure de liaison (123).

14. Tête de remplissage (100) selon la revendication 13, un évidement (133) étant formé sur un côté extérieur (127) de la tubulure de liaison (123), l'élément brise-flot (131) comprenant une saillie, la saillie pouvant être insérée dans l'évidement (133), afin de relier l'élément brise-flot (131) à la tubulure de liaison (123), et l'élément brise-flot (131) pouvant être relié à la tubulure de liaison (123) en particulier par le biais d'une liaison à baïonnette.

15. Tête de remplissage (100) selon la revendication 13 ou 14, au moins une nervure longitudinale (129) étant formée sur un côté extérieur (127) de la tubulure de liaison (123), laquelle nervure s'étend au moins dans certaines parties le long d'un axe longitudinal de la tubulure de liaison (123), la nervure longitudinale (129) comprenant en particulier une butée pour l'élément brise-flot (131) relié à la tubulure de liaison (123).
